# EUROPÄISCHE PATENTSCHRIFT

(11) **EP 3 964 646 B1**
(45) Veröffentlichungstag und Bekanntmachung des Hinweises auf die Patenterteilung: **06.11.2024**
(21) Anmeldenummer: 21194427.7
(22) Anmeldetag: 01.09.2021
(51) Int. Cl.: B09B 3/40, B09B 101/40, E01C 19/02, E01C 19/05, F23G 5/00

(54) **VERFAHREN ZUM AUFBEREITEN VON BITUMEN- UND/ODER TEERHALTIGEN FESTSTOFFEN**
METHOD FOR TREATING BITUMINOUS AND / OR TAR-CONTAINING SOLIDS
PROCÉDÉ DE TRAITEMENT DES SOLIDES CONTENANT DU BITUME ET/OU DU GOUDRON

(30) Priorität: 03.09.2020 DE 102020123078
(43) Veröffentlichungstag der Anmeldung: 09.03.2022
(73) Patentinhaber: Pakexa AG, 8832 Wollerau (CH)
(72) Erfinder: Reichmuth, Roger, 8735 St. Gallenkappel (CH); Hagemann, Philipp, 19053 Schwerin (DE)
(74) Vertreter: Gosdin, Carstensen & Partner Patentanwälte Partnerschaftgesellschaft mbB

(56) Entgegenhaltungen:
- EP-A1- 3 173 526
- WO-A1-80/01816
- DE-A1- 2 635 933
- JP-A- 2002 079 136

## Beschreibung

Die Erfindung betrifft ein Verfahren zum Aufbereiten von bitumen- und/oder teerhaltigen Feststoffen, insbesondere von Straßenaufbruchmaterial bestehend aus Splitt und Bitumen und/oder Teer, umfassend die Schritte:
a) Bereitstellen der aufzubereitenden bitumen- und/oder teerhaltigen Feststoffe;
b) Zuführung der aufzubereitenden bitumen- und/oder teerhaltigen Feststoffe einer Anlage, insbesondere einem Drehrohrofen, in der die bitumen- und/oder teerhaltigen Feststoffe erhitzt werden, bis feste und gasförmige Produkte vorliegen;
c) Bereitstellen der verbleibenden Feststoffe, insbesondere des Splitts, zur weiteren Verwertung,
wobei nach Schritt a) und vor Schritt b) die Schritte ausgeführt werden:
A) Aufbrechen der bitumen- und/oder teerhaltigen Feststoffe, insbesondere in einem Walzenbrecher oder in einer Prallmühle, so dass Partikel unterschiedlicher Größe vorliegen;
B) Sieben der Partikel in mindestens zwei Größenklassen;
C) Mischen der Partikel der mindestens zwei Größenklassen in einem vorgegebenen Verhältnis;
D) Zuführen des Gemisches der Partikel in die Anlage, insbesondere in den Drehrohrofen.

Ein gattungsgemäßes Verfahren ist aus der JP 2002 079 136 A bekannt. Ähnliche Lösungen zeigen die WO 80/01816 A1**,** die DE 26 35 933 A1**,** die EP 3 173 526 A1 sowie die DE 10 2009 025 361 A1**.**

Für die Verwertung von bitumen- und/oder teerhaltigen Feststoffen, ist es von großer Bedeutung, ob diese zusätzlich mit polyzyklischen aromatischen Kohlenwasserstoffen (PAK) belastet sind oder nicht. Der besondere Fokus beispielsweise beim Ausbauasphalt liegt in der möglichst hohen Wiederverwendung von Altasphalt. Diese Wiederverwertung wird maßgeblich durch den Gehalt an PAK beeinflusst. Die Belastung definiert die Verwendung oder Verwertung.

Gegenwärtig darf Ausbauasphalt, der nur eine geringe oder keine PAK-Belastung hat, neuem Asphalt beigemischt werden. Dabei sind Mischungsverhältnisse zu beachten, so dass der Altbitumen nur einen geringen Anteil an der neuen Mischung aufweist, um die Qualität des neuen Straßenbelages nicht negativ zu beeinflussen.

Der wesentliche Vorteil, die Wiederwertung des Splitts, der ja nach Asphalt 90 bis 97 % der Gesamtmasse ausmachen kann, erfolgt unkontrolliert. Die einzelnen Splittklassen werden bei der Wiederverwendung nicht berücksichtigt. D. h. eine gezielte Zusammenstellung ist mit dem Einsatz von recyceltem Asphalt nur in geringem Maße möglich.

Bei vorhandener PAK-Belastung wird überwiegend eine thermische Verwertung durch den Gesetzgeber angestrebt. Bei der thermischen Verwertung werden die Bitumen vom Splitt gelöst. Bei klassischen Verbrennungsanlagen liegt die Verbrennungstemperatur in einem Bereich, bei dem es zu Ausgasungen aus dem Carbonatgestein kommen kann, welches dadurch so nicht wieder einsatzfähig ist. Bei einer Mitverbrennung entsteht ein hoher Ascheanteil. In einer Monoverbrennung entsteht vor allem durch die temperaturbedingte Gesteinszersetzung Sand. Es bedarf also einer Lösung, die zum einen die Bitumen und/oder Teer entfernt und zum anderen ein einsatzfähiges Produkt, im Falle von Ausbausasphalt Splitt mit Primärmaterialeigenschaften liefert. Das Produkt muss dabei vollständig von der PAK-Belastung befreit sein und einen organischen Kohlenstoffgehalt von unterm einem Prozent aufweisen.

Der Thematik der Asphaltaufbereitung wurde bereits verschiedentlich untersucht. Da in jedem Asphaltwerk ein Drehrohr zum Einsatz kommt, liegt es nahe, dass Drehrohre auch beim Asphaltrecycling eingesetzt werden. Eine solche Lösung wird in der DE 10 2014 001 257 A1 beschrieben. In der DE 29 31 367 A1**,** in der DE 34 47 079 A1 und in der DE 35 31 647 A1 wird zwar schon die Beseitigung von Schadstoffen aus einem Gut beschrieben, nicht aber die Wiederverwendbarkeit des Grundstoffes.

In der oben genannten DE 10 2009 025 361 A1 wird eine Anlage zur Aufbereitung von Straßenaufbruchmaterial beschrieben, die ohne eine spezifische Materialvorbereitung auskommt und bei deren maximaler Einsatztemperatur von höchstens 600 °C nicht sichergestellt werden ist, dass der Anteil an organischem Kohlenstoff erheblich reduziert wird. Ebenso wird eine Anlage zur Aufbereitung von Straßenaufbruchmaterial in der DE 10 2012 016 882 B4 beschrieben. Wieder wird auf eine spezifische Materialvorbereitung verzichtet, die in diesem Fall auch durch die Materialauswahl nicht möglich ist und daher ineffizient gestaltet ist. Diese Anlage wird als ortsveränderlich dargestellt und ist somit auf einen Durchsatz im Technikumsmaßstab begrenzt.

Die Grundlage für eine sinnvolle Materialvorbereitung wird in der EP 0 810 276 A1 aufgezeigt. Hierbei wird das Material entsprechend seiner Größe vorsortiert und behandelt. Allerdings wird hier mit festen Verhältnissen geplant, die zwar technisch erstrebenswert sind, in der Praxis aber einen idealen, unerreichbaren Zustand darstellen. Die erstellten Fraktionen werden anschließend mittels eines Bindemittels zusammengeführt. Je nach Einsatzgebiet wird dann ein maximaler Bitumen- und/oder Zementgehalt definiert. Dies stellt ebenso wie die festen Verteilungen der Fraktionen einen praktisch idealen Zustand dar. Dieses Konzept ist damit allerdings nicht praxistauglich, da die Materialeigenschaften und die Schwankungsbreiten beim Ausbauasphalt damit nicht erfasst werden können. Der Einsatz eines Bindemittels zielt dann auf die direkte Nutzung dieses Gemisches und nicht auf die Entfernung, z. B. PAK-haltiger Belastungen, ab.

Einen ähnlichen Ansatz wie die EP 0 810 276 A1 verfolgt die US 4 189 238 A. Im letztgenannten Dokument wird der Ausbausasphalt ebenso nach Größe fraktioniert und anschließend entsprechend der Größe bei unterschiedlichen Gastemperaturen behandelt. Die maximale Gastemperatur der größten Fraktion beträgt hierbei 1.000 °F, also ca. 540 °C. Alle Fraktionen werden final für einen weiteren thermischen Behandlungsschritt zusammengeführt.

Eine Materialtemperatur von 225 °F wird angestrebt, das entspricht ca. 110 °C. Dem Erfinder ist der Zusammenhang zwischen Partikelgröße und Erwärmungszeit bewusst; er strebt dabei bewusst niedrige Temperaturen an, um möglichst viel Asphalt inklusive Bitumen der Wiederverwendung zuführen zu können. Das teilweise Entweichen von leichtflüchtigen Kohlenwasserstoffen wird hierbei positiv in Hinblick auf die Energieeinsparung gesehen. Dieser Schritt läuft bei diesen Temperaturen noch nicht gezielt ab. PAK-haltige Belastungen bleiben unberührt. Die Mehrstuftigkeit des thermischen Prozesses ist nicht praktikabel.

Der Erfindung liegt daher die **Aufgabe** zugrunde, ein gattungsgemäßes Verfahren so weiterzuentwickeln, dass es möglich ist, ein weiter verbessertes und effizienteres Recycling von bitumen- und teerhaltigen Feststoffen, insbesondere von Straßenaufbruchsmaterial, bereitzustellen, wobei hochwertiger Splitt gewonnen werden soll, der wieder verwendet werden kann. Weiterhin soll das Verfahren unter energetischen Gesichtspunkten optimiert werden.

Die Lös u n g dieser Aufgabe durch die Erfindung sieht vor, dass das Erhitzen der aufzubereitenden bitumen- und/oder teerhaltigen Feststoffe in der Anlage auf eine Temperatur zwischen 600 °C und 800 °C erfolgt.

Das Sieben gemäß obigem Schritt B) erfolgt dabei bevorzugt in mindestens drei, besonders bevorzugt in vier Größenklassen. Hierbei erfolgt das Sieben bevorzugt in eine erste Größenklasse für eine Partikelgröße zwischen 0 mm und 4 mm, in eine zweite Größenklasse für eine Partikelgröße zwischen 4 mm und 10 mm und in eine dritte Größenklasse für eine Partikelgröße zwischen 10 mm und 20 mm und gegebenenfalls in eine vierte Größenklasse für eine Partikelgröße zwischen 20 mm und 40 mm.

Das Mischen gemäß obigem Schritt C) erfolgt bevorzugt so, dass das Gemisch einen vorgegebenen Heizwert aufweist.

Das Mischen gemäß obigem Schritt C) kann auch alternativ so erfolgen, dass alle gewonnenen Größenklassen gemäß ihrem mengenmäßigen Anteil zusammengeführt werden.

Eine weitere Alternative sieht vor, dass das Mischen gemäß obigem Schritt C) so erfolgt, dass ein vorgegebenes Mengenverhältnis zwischen den gewonnenen Größenklassen eingehalten wird.

Mit dieser vorgeschlagenen Vorgehensweise wird erreicht, dass stets ein definiertes Maß an Heterogenität erreicht wird und so generell der Wiederverwertungsprozess des Materials, d. h. insbesondere des Splitts, optimiert wird. Gleichermaßen kann hiermit eine energetische Optimierung erfolgen, so dass der Verbrennungsprozess in einem bestmöglichen Bereich stattfindet.

Eine definierte Verweilzeit innerhalb der Anlage, insbesondere des Drehrohrofens, sorgt dafür, dass der Splitt nicht überhitzt, aber dennoch von seiner organischen Fracht befreit wird.

Durch das Brechen und das Sieben sowie durch das sich anschließende Zusammenführen der Fraktionen kann in optimierter Weise das Material für die Verbrennung zusammengestellt und dessen Eigenschaften definiert werden. Das Material ist stets heterogen, was zum einen durch die Stückigkeit und zum anderen durch die jeweiligen Anteile an Bitumen innerhalb der einzelnen Korngrößen bedingt ist. Dieses Problem wird mit der oben erläuterten Vorgehensweise gelöst, wonach ein vorheriges Fraktionieren des gebrochenen Materials und eine anschließende erneute und definierte Mischung erfolgt. Das eliminiert die Heterogenität zwar nicht und führt nicht zu einer Homogenität des Materials, es sorgt aber dafür, dass die Verteilung der Heterogenität weitgehend konstant ist. Damit können die Bedingungen für die Verbrennung besser kontrolliert werden und der Prozess für den Splitt schonender gefahren werden.

Schließlich erfolgt ein Sieben des gewonnenen Splitts in einzelnen Siebklassen, wodurch das gewonnene Primärmaterial direkt weiterverwendet werden kann.

Das Bereitstellen der verbleibenden Feststoffe gemäß obigem Schritt c) umfasst bevorzugt also auch das Sieben der Feststoffe in unterschiedliche Größenklassen.

Die beim Erhitzen der aufzubereitenden bitumen- und/oder teerhaltigen Feststoffe in der Anlage, insbesondere im Drehrohrofen, anfallende Wärme kann über einen Wärmetauscher abgeführt und einer separaten Nutzung zugeführt werden.

Hierbei sieht eine besonders bevorzugte Ausgestaltung des vorgeschlagenen Verfahrens vor, dass die anfallende Wärme zumindest teilweise zur Vorwärmung der aufzubereitenden bitumen- und/oder teerhaltigen Feststoffe vor der Zuführung gemäß obigem Schritt b) genutzt wird.

Mit dem erfindungsgemäßen Vorschlag kann eine effiziente Verwertung von bitumen- und teerhaltigen Feststoffen erfolgen, die insbesondere PAK-haltig sind. Das vorgeschlagene Verfahren behandelt die Feststoffe thermisch mit dem Resultat einer maximalen stofflichen Weiterverwertung des Grundstoffes, so dass Primär- und/oder Sekundärrohstoffe aus dem Eingangsmaterial gewonnen werden können. Als Nebenprodukt fällt Wärme an, die teilweise prozessintern genutzt und teilweise ausgespeist werden kann.

Möglich ist eine Nutzung der Wärme zumindest eines Teils des bei der Erhitzung entstehenden gasförmigen Produkts.

Bei der Erhitzung bzw. Verbrennung in der Anlage (d. h. insbesondere im Drehrohrofen) wird angestrebt, dass der Gehalt an organischem Kohlenstoff im verwendeten kohlenstoffhaltigen Festrohstoff unter 1 % liegt.

Das vorgeschlagene Verfahren wird vorteilhaft mit weiteren Maßnahmen verbunden, die unter energetischen und ökologischen Gesichtspunkten vorteilhaft sind.

So kann eine Nachverbrennung des für die Wärmenutzung vorgesehenen Mediums zu einem Abgas erfolgen.

Das Abgas kann einer Entstaubung unterzogen werden.

Über einen Wärmetauscher kann aus dem Abgas Wärme entzogen und diese anderweitig weiterverwendet werden.

Es kann eine Abgasnachbehandlung des heruntergekühlten Abgases erfolgen. Hierbei kommen bevorzugt Gaswäscher bzw. eine Gaswäscherkolonne zum Einsatz.

Nachdem das Material, d. h. insbesondere der Splitt, gewonnen wurde, kann eine Siebung erfolgen, so dass Material unterschiedlicher Größenklassen bzw. Fraktionen gewonnen werden können.

Das Verfahren kann optisch überwacht werden, um den einwandfreien Ablauf zu gewährleisten.

Möglich ist es weiterhin, dass das gewonnene Material, insbesondere der Splitt, gebrochen wird, um weitere Größenklassen zu erhalten.

Die Überschusswärme aus dem Prozess kann zur Vorwärmung des bitumen- und/oder teerhaltigen Feststoffes und/oder des Luftbedarfs bzw. Sauerstoffbedarfs genutzt werden.

Bei der Vorbereitung des Materials (d. h. beim Aufbrechen der bitumen- und/oder teerhaltigen Feststoffe) kann eine Einstellung der Partikelgröße mittels eines (Walzen-)Brechers, einer (Prall-)Mühle, eines Mahlwerks und/oder eines Shredders erfolgen, wobei eine Partikelgröße bis 200 mm, vorzugsweise bis 100 mm und besonders bevorzugt bis 40 mm, angestrebt wird.

Das Sieben der bitumen- und/oder teerhaltigen Feststoffe erfolgt bevorzugt mittels einer Siebtrommel, eines Rüttelsiebs, einer Siebmaschine und/oder einem Filter in mindestens drei Fraktionen. Davon kann eine einen Korndurchmesser von 0 mm bis 10 mm aufweisen, vorzugsweise von 0 mm bis 5 mm.

Das Mischen der Partikel (mindestens zweier Größenklassen) hat zur Folge, dass vorteilhaft eine konstante Heterogenität des Materials eingestellt werden kann, welches dann in den Drehrohrofen gelangt.

Bevorzugt erfolgt eine Vorwärmung des Materials, gegebenenfalls allerdings auch der Luft und des zum Einsatz kommenden Erdgases für die Befeuerung, mittels Wärmetauscher vor der Durchführung der eigentlichen Verbrennung.

Der Drehrohrofen wird vorzugsweise direkt beheizt und vorzugsweise in Gleichstromrichtung betrieben.

Für die Verbrennung des erfindungsgemäß zusammengestellten Materials hat sich folgendes besonders bewährt:
Die Materialtemperatur während der Verbrennung liegt bevorzugt zwischen 300 °C und 900 °C, besonders bevorzugt zwischen 500 °C und 850 °C und in ganz besonders bevorzugter Weise zwischen 600 °C und 800 °C.

Die Verweilzeit des Feststoffes in der Anlage (d. h. insbesondere im Drehrohrofen) liegt bevorzugt zwischen 0,01 und 10,0 Stunden, besonders bevorzugt zwischen 0,05 und 5,0 Stunden und in ganz besonders bevorzugter Weise zwischen 0,25 und 0,5 Stunden.

Die Verbrennung kann sowohl im Gleichstrom, als auch im Gegenstrom erfolgen. Im Gleichstrom tritt der bitumen- und/oder teerhaltige Feststoff auf der Brennerseite in das Drehrohr ein. Gas- und Feststoffaustrag sind an der gegenüberliegenden Seite des Drehrohrs. Beim Gegenstromprinzip befindet sich der Gasaustrag an der Materialeintragsseite. Der Brenner befindet sich gegenüber beim Feststoffaustrag.

Die Partikelgröße des Materials beim Verbringen in die Anlage (d. h. insbesondere in den Drehrohrofen) liegt bevorzugt unter 200 mm, besonders bevorzugt unter 80 mm und ganz besonders bevorzugt unter 40 mm.

Der Anteil an organischem Kohlenstoff des in die Anlage (d. h. insbesondere in den Drehrohrofen) gelangenden Materials liegt bevorzugt unterhalb von 20 Massen-%, besonders bevorzugt unterhalb von 10 Massen-% und ganz besonders bevorzugt unterhalb von 6 Massen-%.

Die Verbrennung im Drehrohrofen kann überstöchiometrisch erfolgen oder bei entsprechender Berücksichtigung der Wärmenutzung unterstöchiometrisch.

Die Wärmenutzung kann durch eine der Anlage (d. h. insbesondere den Drehrohrofen) nachgelagerte Nachbrennkammer erfolgen, wo eine Nachverbrennung der Abgase erfolgt, vorzugsweise bei einer Temperatur von 800 °C bis 1.200 °C, besonders bevorzugt bei 850 °C bis 900 °C.

Die stoffliche Verwertung des gewonnenen Materials stellt eine Bereitstellung von Primärrohstoffen und/oder Sekundärrohstoffen dar.

Ferner kann eine Entstaubung des Abgases erfolgen, wozu ein Zyklon bzw. ein Filter eingesetzt werden kann.

Ferner kann die Abkühlung des Abgases mittels eines Wärmetauschers vorgesehen werden, vorzugsweise in Form eines Abhitzekessels, um das Abgas nach der Entstaubung abzukühlen; hierbei kann die Abwärme genutzt werden, um Dampf zu erzeugen oder um Wasser, Thermoöl, Wärmeträgersalz oder Luft zu erhitzen.

Bei der Abgasbehandlung zur Einstellung der gesetzlichen Vorgaben werden Stickoxid- und Schwefeloxidgrenzwerte eingehalten, wozu Wäscher, Filter oder katalytische Verfahren eingesetzt werden können.

Die Abkühlung des festen Produktes kann mittels eines Drehrohrkühlers erfolgen, wobei eine Produkttemperatur im Bereich zwischen 20 °C und 80 °C angestrebt wird, vorzugsweise zwischen 30 °C und 50 °C.

Das Sieben des festen, abgekühlten Produktes (Splitt) in mindestens zwei Siebfraktionen kann durch ein Trommelsieb, eine Siebmaschine, ein Rüttelsieb und/oder einen Filter erfolgen.

Eine optische Überwachung des festen Produktes und/oder der Produktfraktionen kann durch optische Sensoren erfolgen, wobei Farbabweichung und/oder geometrische Abweichungen erfasst werden können.

Das Brechen des festen Produktes und/oder der Produktfraktionen erfolgt bevorzugt mittels Mühle, Mahlwerk, Shredder und/oder Brecher.

Die entstehende Wärme kann genutzt werden, um den bitumen- und/oder teerhaltigen Feststoff und/oder die für die Verbrennung bereitgestellte Luft und/oder das für die Verbrennung notwendige Erdgas vorzuwärmen.

Das vorgeschlagene Verfahren kommt besonders für die Behandlung von PAK-haltigem Ausbauasphalt zum Einsatz.

Die Verbrennung erfolgt bevorzugt in einer Anlage in Form eines Verbrennungsreaktors, wobei der Verbrennungsreaktor vorzugsweise ein direkt beheiztes Drehrohrsystem (Drehrohrofen) umfasst.

Bei dem vorgeschlagenen Verfahren wird durch die Verbrennung der Anteil an Bitumen und/oder an Teer des bitumen- und teerhaltigen Feststoffes bevorzugt auf unter 0,5 % abgesenkt.

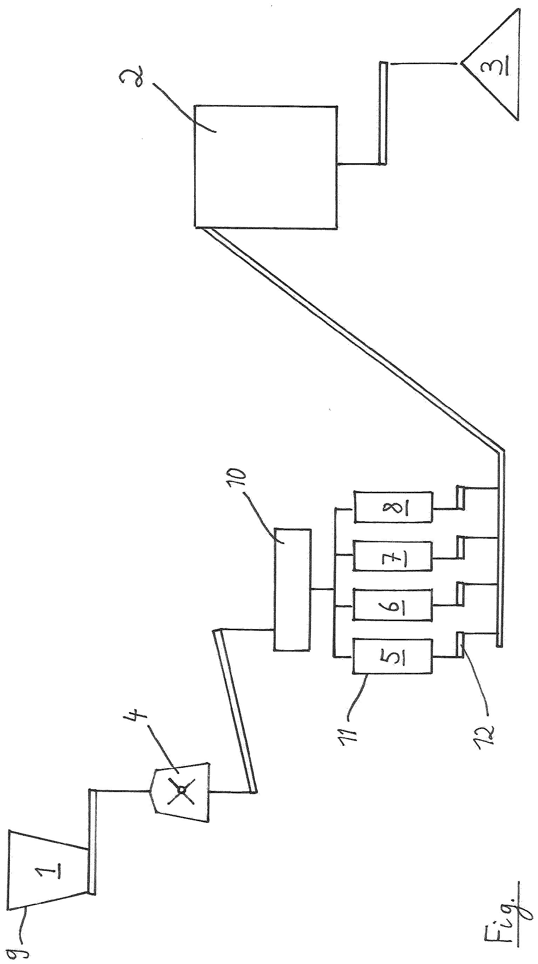

In der Zeichnung ist ein Ausführungsbeispiel der Erfindung dargestellt. Die einzige Figur zeigt schematisch eine Anordnung für das Recyceln von Straßenaufbruchmaterial, wobei der in diesem enthaltene Splitt wiedergewonnen wird.

In der Figur ist zunächst ein Behälter 9 zu erkennen, in dem bitumen- und/oder teerhaltiger Feststoff 1 gelagert wird. Dieser stammt von einer Straße, deren Oberfläche abgefräst wurde. Der Feststoff 1 soll aufbereitet werden, um den Splitt zu gewinnen, der sich in ihm befindet; dieser soll wieder verwertet werden. Insoweit wird ausdrücklich auf die oben genannte DE 10 2009 025 361 A1 Bezug genommen, wo dieser Prozess generell beschrieben ist.

Demgemäß ist vorgesehen, dass der Feststoff 1 in Form von Straßenaufbruchmaterial aus dem Behälter 9 bereitgestellt wird, um dann in eine Anlage 2 in Form eines Drehrohrofens verbracht zu werden. Im Drehrohrofen 2 erfolgt ein Verbrennen des Feststoffs 1, so dass feste und gasförmige Produkte erzeugt werden. Anschließend wird der so gewonnene und vom Bitumen bzw. vom Teer befreite Splitt 3 bereitgestellt, um wieder verwertet zu werden.

Wesentlich ist, dass zwischen der Bereitstellung des Feststoffs 1 aus dem Behälter 9 und dem Verbringen des Materials in den Drehrohrofen 2 folgende Schritte durchgeführt werden:
Zunächst erfolgt ein Aufbrechen der bitumen- und/oder teerhaltigen Feststoffe 1, wofür ein Brecher 4 zum Einsatz kommt. Es handelt sich hierbei insbesondere um einen Walzenbrecher oder um eine Prallmühle. Das Resultat des Brechens des Feststoffs 1 sind Partikel 5, 6, 7, 8 unterschiedlicher Größe.

Dieser Partikel werden dann gesiebt, wofür eine Siebmaschine 10 zum Einsatz kommt. Im vorliegenden Falle trennt die Siebmaschine 10 die gebrochenen Partikel in vier Größenklassen: Die erste Größenklasse sieht eine Partikelgröße zwischen 0 mm und 4 mm vor, die zweite Größenklasse eine Partikelgröße zwischen 4 mm und 10 mm, die dritte Größenklasse eine Partikelgröße zwischen 10 mm und 20 mm und die vierte Größenklasse eine Partikelgröße zwischen 20 mm und 40 mm. Die gesiebten Partikel werden in jeweilige Silos 11 verbracht.

Anschließend erfolgt ein Mischen der Partikel 5, 6, 7, 8 der insgesamt vier verschiedenen Größenklassen in einem vorgegebenen Verhältnis. Hierzu sind Dosiereinheiten 12 vorgesehen, die jedem Silo 11 zugeordnet sind und mit denen eine definierte Menge Partikel (pro Zeit) ausgebracht werden kann, wobei die Partikel 5, 6, 7, 8 dann vermischt werden (was nicht näher dargestellt ist). Die Mischung wird dem Drehrohrofen 2 zugeführt und dort in der beschriebenen Weise verarbeitet.

Das vorgeschlagene Konzept sieht somit vor, dass der Feststoff 1 zunächst gebrochen wird. Anschließend kommt das gebrochene Material in eine Siebmaschine, wo die genannten vier Fraktionen abgesiebt werden. Die genannten Siebungen orientieren sich an den Splittklassen der Asphalt- bzw. Betonvorgaben. Die Fraktionen kommen in ihre jeweiligen Silos 11. Von dort werden sie über die Dosiereinheiten 12 auf ein gemeinsames Förderband gebracht. Dies bringt dann das definierte Gemisch entweder direkt zum Drehrohrofen; allerdings kann auch vorgesehen werden, dass es zunächst in ein Zwischenlager verbracht wird (nicht dargestellt).

Die Zusammenstellung der Mischung kann, wie oben erläutert, prinzipiell auf unterschiedliche Weise erfolgen:
Zunächst kommt eine Beurteilung des Heizwertes der einzelnen Fraktionen in Betracht und damit eine Heizwertdefinition bezüglich des Drehrohres. Hier liegt der Gedanke zugrunde, dass in den feineren Fraktionen der Bitumenanteil und damit der Heizwert größer ist. Das Drehrohr fährt vom energetischen Input dann optimal, aber nicht unbedingt hinsichtlich des Gesamtdurchsatzes.

Alternativ kommt eine Mischung in Abhängigkeit der Anteile der anfallenden Fraktionen infrage. Hierbei steuern die Dosierungseinheiten 12 selbstständig die Mischung so, dass die einzelnen Fraktionen immer gemäß ihrem jeweiligen Anteil zugeführt werden. Das bedeutet, dass im Vergleich zur klassischen und vorbekannten Mengenverteilung kein Unterschied besteht, die Mischung auf dem Förderband allerdings durch den genannten Prozess wesentlich homogener ist und somit besser verarbeitet werden kann.

Weiter alternativ ist es auch möglich, die Mischung in einem festen Verhältnis der Fraktionen zueinander vorzunehmen. Entscheidend ist dabei die am häufigsten auftretende Fraktion. Bei den größeren Fraktionen kann im Falle von sehr großen Partikelgrößen vorgesehen werden, dass das Material nochmals gebrochen wird.

Im Ergebnis wird in jedem Falle vorteilhaft erreicht, dass stets eine gewisse Eingrenzung des Heizwertes bei gleichzeitiger Sicherstellung des Durchsatzes erfolgt.

Versuche zur Thematik haben gezeigt, dass die vorgeschlagene Vorgehensweise zu besseren Ergebnissen führt, als diese durch vorbekannte Verfahren erreichbar sind. Durch das Fraktionierung des gebrochenen Materials und das anschließende Vermischen in der erläuterten Weise konnten negative Effekte, die von einer stark heterogenen Materialverteilung herrühren, vermieden werden.

Ohne die vorgeschlagene Vorgehensweise kommt die Stützfeuerung teilweise an ihre Grenzen und die Thermodynamik innerhalb des Reaktors (Drehrohrofen) ist schwerer zu kontrollieren.

Hinter dem Drehrohrofen 2 kann, was nicht mehr weiter dargestellt ist, eine Bereitstellung der verbleibenden Feststoffe dergestalt erfolgen, das durch Sieben der gewonnenen Feststoffe unterschiedliche Größenklassen bereitgestellt werden.

Bevorzugt ist vorgesehen, dass eine Kopplung der Drehrohrverbrennung mit der Verwertung der Produkte erfolgt, d. h. insbesondere der Wärmenutzung und die stoffliche Verwertung.

Bei der Verbrennung in der Anlage 2 (d. h. im Drehrohrofen) ist es bevorzugt, dass eine Verbrennung bei niedriger Temperatur erfolgt, bei der die Bitumen bzw. Teere verbrannt werden, die Ausgasung bzw. Entsäuerung aus dem Gestein allerdings unterbunden wird.

Bevorzugt wird dabei auf den Gehalt an organischem Kohlenstoff (C_{org}) geachtet, den das in die Anlage 2 eingesetzte Material aufweist. Der organische Kohlenstoffgehalt des in das Drehrohr eingesetzten Materials beträgt bevorzugt zwischen 1 % und 50 %, besonders bevorzugt zwischen 2 % und 6 %. Durch die Verbrennung wird der organische Kohlenstoff zu Gasen oxidiert. Der Feststoff wird dadurch von seiner organischen Fracht getrennt.

Eine weitere relevante Eigenschaft des bitumen- und/oder teerhaltigen Feststoffs ist die Korngröße und die Korngrößenverteilung. Beim Ausbau der bitumen- und/oder teerhaltigen Feststoffe entsteht eine heterogene Korngröße. Der Transport, die Zwischenlagerung und/oder der Weitertransport sorgen naturgemäß für eine Entmischung von feineren und gröberen Fraktionen. Durch das Brechen des Materials und die gezielte Siebung in mindestens zwei Fraktionen sowie die sich anschließende definierte Einstellung der Fraktionsanteile erlauben es, dass für den Prozess eine optimale konstante Heterogenität eingestellt wird. Damit läuft der Verbrennungsvorgang in der Anlage (d. h. insbesondere im Drehrohrofen) konstanter ab und steigert die Effizienz der Verbrennung im Vergleich zu einer undefinierten Materialzusammensetzung.

Die genannte Einstellung der Korngröße kann auch dann vorteilhaft sein, wenn bei der Bereitstellung des bitumen- und/oder teerhaltigen Feststoffs eine Korngröße vorliegt, die für die Durchführung der Verbrennung in der Anlage 2 bereits ausreichend klein ist.

Die Vorwärmung des Materials, der Luft und gegebenenfalls des für die Verbrennung eingesetzten Erdgases kann durch jedes geeignete Wärmeaustauschverfahren erfolgen. Vorzugsweise wird die Vorwärmung mittels Gas-Feststoff-Wärmetauscher, mittels Flüssig-Feststoff-Wärmetauscher oder einer Kombination hiervon durchgeführt.

Insoweit ist es möglich, die Wärmezufuhr mittels Wärmeträger vorzunehmen, wobei der Wärmeträger Thermalöl, Luft oder ein Wärmeträgersalz ist.

Die Vorwärmung kann auf 50 °C bis 250 °C, vorzugweise auf 65 °C bis 100 °C und besonders bevorzugt auf 70 °C bis 80 °C erfolgen. Um unerwünschte Nebenreaktionen zu vermeiden, kann es vorteilhaft sein, die Vorwärmung indirekt durchzuführen.

In der Anlage 2, d. h. insbesondere im Drehrohrofen, erfolgt die Verbrennung des Materials. Dieser Begriff bezeichnet eine ausschließlich durch hohe Temperaturen bewirkte Oxidation, die in der Anlage 2 durchgeführt wird. Vorzugsweise wird hierzu das Drehrohr direkt beheizt, bevorzugt wird es im Gleichstromprinzip gefahren, d. h. der Materialeintrag und die Verbrennung finden auf einer Seite statt. Der Materialaustrag findet auf der gegenüberliegenden Seite statt.

Es kann ausreichend und vorteilhaft sein, nur eine Teilmenge des bereitgestellten bitumen- und/oder teerhaltigen Feststoffs zu verwenden und eine Teilmenge hiervon nach der beschriebenen Behandlung wieder mit der restlichen Teilmenge aus dem bereitgestellten Feststoff zu vermischen. Es kann auch vorteilhaft sein, nur eine Teilmenge des bereitgestellten bitumen- und/oder teerhaltigen Feststoffs zur Vorwärmung einzusetzen und die so erhaltene erwärmte Teilmenge mit weiterem bereitgestellten bitumen- und/oder teerhaltigen Feststoffs zu vermischen.

Vorteilhaft ist, dass die Verbrennung in Abhängigkeit des gebildeten Produktgemisches erfolgt, wobei wenigstens eine weitere erfasste Eigenschaft des bitumen- und/oder teehaltigen Feststoffs angepasst wird, d. h. eine oder mehrere Bedingungen der Verbrennung werden auf das bereitgestellte Produktgemisch angepasst, bevor dieses in die Anlage 2 gelangt.

Die Erfassung der relevanten Eigenschaften des Produktgemisches erfolgt demgemäß vor dem Verbrennungsschritt und kann je nach Verfahrensführung in gewünschter Weise angepasst werden.

Der bereitgestellte bitumen- und/oder teehaltige Feststoff beinhaltet zum Teil kohlenstoffhaltige Stoffe und zu einem weiteren Teil anorganische Stoffe, die unter Standardbedingungen (25 °C; 101,325 kPa) in fester Form vorliegen.

Die Steuerung der Anlage 2, d. h. insbesondere des Drehrohrofens, also die Auswahl der Bedingungen für die Verbrennung, erfolgt in Abhängigkeit der vorgenannten erfassten Eigenschaften des bitumen- und/oder teerhaltigen Feststoffs.

Zur Durchführung der Verbrennung kann prinzipiell jede beliebige und dem Fachmann bekannte Vorrichtung verwendet werden, die für die Verbrennung geeignet ist und eine Wahl der Verbrennungsbedingungen zulässt.

Die Kombination der erfassten Eigenschaften des bitumen- und/oder teerhaltigen Feststoffs kann in Abhängigkeit von den gewählten Verbrennungsbedingungen vorteilhaft im Hinblick auf den Gesamtprozess erfolgen, insbesondere im Hinblick auf die Gesamtenergieeffizienz und die Wärmeausbeute. Beispielsweise können die Erfassung des organischen Kohlenstoffgehaltes und der Stückgröße des bitumen- und/oder teerhaltigen Feststoffs und die entsprechende Wahl der Verbrennungstemperatur und der Verweildauer im Hinblick auf die Gesamtenergieeffizienz sowie gegebenenfalls die Wärmeausbeute vorteilhaft sein.

### Bezugszeichenliste:

- 1: bitumen- und/oder teerhaltiger Feststoff
- 2: Anlage für die Verbrennung (Drehrohrofen)
- 3: Splitt
- 4: Brecher
- 5: Partikel erster Größenklasse
- 6: Partikel zweiter Größenklasse
- 7: Partikel dritter Größenklasse
- 8: Partikel vierter Größenklasse
- 9: Behälter
- 10: Siebmaschine
- 11: Silo
- 12: Dosiereinheit

## Patentansprüche

1. Verfahren zum Aufbereiten von bitumen- und/oder teerhaltigen Feststoffen (1), insbesondere von Straßenaufbruchmaterial bestehend aus Splitt und Bitumen und/oder Teer, umfassend die Schritte:
a) Bereitstellen der aufzubereitenden bitumen- und/oder teerhaltigen Feststoffe (1);
b) Zuführung der aufzubereitenden bitumen- und/oder teerhaltigen Feststoffe (1) einer Anlage (2), insbesondere einem Drehrohrofen, in der die bitumen- und/oder teerhaltigen Feststoffe erhitzt werden, bis feste und gasförmige Produkte vorliegen;
c) Bereitstellen der verbleibenden Feststoffe, insbesondere des Splitts (3), zur weiteren Verwertung,
wobei nach Schritt a) und vor Schritt b) die Schritte ausgeführt werden:
A) Aufbrechen (4) der bitumen- und/oder teerhaltigen Feststoffe (1), insbesondere in einem Walzenbrecher oder in einer Prallmühle, so dass Partikel (5, 6, 7, 8) unterschiedlicher Größe vorliegen;
B) Sieben der Partikel (5, 6, 7, 8) in mindestens zwei Größenklassen;
C) Mischen der Partikel (5, 6, 7, 8) der mindestens zwei Größenklassen in einem vorgegebenen Verhältnis;
D) Zuführen des Gemisches der Partikel (5, 6, 7, 8) in die Anlage (2), insbesondere in den Drehrohrofen,
**dadurch gekennzeichnet, dass**
das Erhitzen der aufzubereitenden bitumen- und/oder teerhaltigen Feststoffe in der Anlage (2) auf eine Temperatur zwischen 600 °C und 800 °C erfolgt.

2. Verfahren nach Anspruch 1, **dadurch gekennzeichnet, dass** das Sieben gemäß Schritt B) gemäß Anspruch 1 in mindestens drei, vorzugsweise in vier Größenklassen erfolgt.

3. Verfahren nach Anspruch 2, **dadurch gekennzeichnet, dass** das Sieben in eine erste Größenklasse für eine Partikelgröße zwischen 0 mm und 4 mm erfolgt, in eine zweite Größenklasse für eine Partikelgröße zwischen 4 mm und 10 mm erfolgt und in eine dritte Größenklasse für eine Partikelgröße zwischen 10 mm und 20 mm erfolgt und vorzugsweise in eine vierte Größenklasse für eine Partikelgröße zwischen 20 mm und 40 mm erfolgt.

4. Verfahren nach einem der Ansprüche 1 bis 3, **dadurch gekennzeichnet, dass** das Mischen gemäß Schritt C) von Anspruch 1 so erfolgt, dass das Gemisch einen vorgegebenen Heizwert aufweist.

5. Verfahren nach einem der Ansprüche 1 bis 3, **dadurch gekennzeichnet, dass** das Mischen gemäß Schritt C) von Anspruch 1 so erfolgt, dass alle gewonnenen Größenklassen gemäß ihrem mengenmäßigen Anteil zusammengeführt werden.

6. Verfahren nach einem der Ansprüche 1 bis 3, **dadurch gekennzeichnet, dass** das Mischen gemäß Schritt C) von Anspruch 1 so erfolgt, dass ein vorgegebenes Mengenverhältnis zwischen den gewonnenen Größenklassen eingehalten wird.

7. Verfahren nach einem der Ansprüche 1 bis 6, **dadurch gekennzeichnet, dass** das Bereitstellen der verbleibenden Feststoffe gemäß Schritt c) von Anspruch 1 das Sieben der Feststoffe, insbesondere des Splitts, in unterschiedliche Größenklassen umfasst.

8. Verfahren nach einem der Ansprüche 1 bis 7, **dadurch gekennzeichnet, dass** die beim Erhitzen der aufzubereitenden bitumen- und/oder teerhaltigen Feststoffe in der Anlage (2), insbesondere im Drehrohrofen, anfallende Wärme über einen Wärmetauscher abgeführt und einer separaten Nutzung zugeführt wird.

9. Verfahren nach Anspruch 8, **dadurch gekennzeichnet, dass** die anfallende Wärme zumindest teilweise zur Vorwärmung der aufzubereitenden bitumen- und/oder teerhaltigen Feststoffe vor der Zuführung gemäß Schritt b) von Anspruch 1 genutzt wird.

## Claims

1. Method for preparing bitumen- and/or tar-containing solids (1), in particular road demolition material consisting of split and bitumen and/or tar, comprising the steps of:
a) Providing the bitumen and/or tar-containing solids (1) to be processed;
b) Feeding the bitumen- and/or tar-containing solids (1) to be processed to a plant (2), in particular a rotary kiln, in which the bitumen- and/or tar-containing solids are heated until solid and gaseous products are present;
c) Providing of the remaining solids, in particular the split (3), for further utilisation,
wherein the steps are carried out after step a) and before step b):
A) Breaking up (4) the bitumen- and/or tar-containing solids (1), in particular in a roller crusher or in an impact mill, so that particles (5, 6, 7, 8) of different sizes are present;
B) Sieving of the particles (5, 6, 7, 8) in at least two size classes;
C) Mixing the particles (5, 6, 7, 8) of at least two size classes in a predetermined ratio;
D) Feeding the mixture of particles (5, 6, 7, 8) into the plant (2), in particular into the rotary kiln,
**characterized in**
**that** the bitumen and/or tar-containing solids to be prepared are heated in the plant (2) to a temperature of between 600 °C and 800 °C.

2. Method according to claim 1, **characterised in that** the sieving according to step B) according to claim 1 is carried out in at least three, preferably four size classes.

3. Method according to claim 2, **characterised in that** the sieving is carried out in a first size class for a particle size between 0 mm and 4 mm, in a second size class for a particle size between 4 mm and 10 mm and in a third size class for a particle size between 10 mm and 20 mm and preferably in a fourth size class for a particle size between 20 mm and 40 mm.

4. Method according to one of claims 1 to 3, **characterised in that** the mixing according to step C) of claim 1 is carried out in such a way that the mixture has a predetermined calorific value.

5. Method according to one of claims 1 to 3, **characterised in that** the mixing according to step C) of claim 1 is carried out in such a way that all size classes obtained are combined according to their quantitative proportion.

6. Method according to one of claims 1 to 3, **characterised in that** the mixing according to step C) of claim 1 is carried out in such a way that a predetermined quantity ratio between the size classes obtained is maintained.

7. Method according to one of claims 1 to 6, **characterised in that** providing of the remaining solids according to step c) of claim 1 comprises sieving the solids, in particular the split, into different size classes.

8. Method according to one of claims 1 to 7, **characterised in that** the heat generated during the heating of the bitumen- and/or tar-containing solids to be processed in the plant (2), in particular in the rotary kiln, is dissipated via a heat exchanger and fed to a separate use.

9. Method according to claim 8, **characterised in that** the heat produced is used at least in part to preheat the bitumen- and/or tar-containing solids to be processed prior to feeding according to step b) of claim 1.

## Revendications

1. Procédé de traitement de solides (1) contenant du bitume et/ou du goudron, en particulier de matériau de démolition de routes constitué de gravillons et de bitume et/ou de goudron, comprenant les étapes :
a) mise à disposition des solides (1) contenant du bitume et/ou du goudron ;
b) introduction des solides (1) contenant du bitume et/ou du goudron à traiter dans une installation (2), en particulier un four tubulaire rotatif, dans lequel les solides contenant du bitume et/ou du goudron sont chauffés, jusqu'à l'obtention de produits solides et gazeux ;
c) mise à disposition des solides restants, en particulier des gravillons (3), à une valorisation ultérieure,
les étapes suivantes étant réalisées après l'étape a) et avant l'étape b) :
A) concassage (4) des solides (1) contenant du bitume et/ou du goudron, en particulier dans un concasseur à rouleaux ou dans un broyeur à percussion, de manière à obtenir des particules (5, 6, 7, 8) de différentes grosseurs ;
B) tamisage des particules (5, 6, 7, 8) en au moins deux classes de grosseurs ;
C) mélange des particules (5, 6, 7, 8) des au moins deux classes de grosseurs dans un rapport prédéfini ;
D) introduction du mélange des particules (5, 6, 7, 8) dans l'installation (2), en particulier dans le four tubulaire rotatif,
**caractérisé en ce que** le chauffage des solides contenant du bitume et/ou du goudron à traiter dans l'installation (2) est réalisé à une température entre 600°C et 800°C.

2. Procédé selon la revendication 1, **caractérisé en ce que** le tamisage selon l'étape B) selon la revendication 1 est réalisé en au moins trois, de préférence en quatre classes de grosseurs.

3. Procédé selon la revendication 2, **caractérisé en ce que** le tamisage est réalisé en une première classe de grosseurs pour une grosseur de particule entre 0 mm et 4 mm, en une deuxième classe de grosseurs pour une grosseur de particule entre 4 mm et 10 mm et en une troisième classe de grosseurs pour une grosseur de particule entre 10 mm et 20 mm et de préférence en une quatrième classe de grosseurs pour une grosseur de particule entre 20 mm et 40 mm.

4. Procédé selon l'une des revendications 1 à 3, **caractérisé en ce que** le mélange selon l'étape C) de la revendication 1 est réalisé de telle sorte que le mélange présente une valeur calorifique prédéfinie.

5. Procédé selon l'une des revendications 1 à 3, **caractérisé en ce que** le mélange selon l'étape C) de la revendication 1 est réalisé de telle sorte que toutes les classes de grosseurs obtenues sont rassemblées selon leur proportion quantitative.

6. Procédé selon l'une des revendications 1 à 3, **caractérisé en ce que** le mélange selon l'étape C) de la revendication 1 est réalisé de telle sorte qu'un rapport de mélange prédéfini entre les classes de grosseurs obtenues est respecté.

7. Procédé selon l'une des revendications 1 à 6, **caractérisé en ce que** la mise à disposition des solides restants selon l'étape c) de la revendication 1 comprend le tamisage des solides, en particulier des gravillons, en différentes classes de grosseurs.

8. Procédé selon l'une des revendications 1 à 7, **caractérisé en ce que** la chaleur produite lors du chauffage des solides (1) contenant du bitume et/ou du goudron à traiter dans l'installation (2), en particulier le four tubulaire rotatif, est évacuée par l'intermédiaire d'un échangeur thermique et introduite dans une utilisation séparée.

9. Procédé selon la revendication 8, **caractérisé en ce que** la chaleur produite est utilisée au moins partiellement pour le préchauffage des solides contenant du bitume et/ou du goudron à traiter avant l'introduction selon l'étape b) de la revendication 1.
